# EUROPEAN PATENT SPECIFICATION

(11) **EP 1 907 501 B1**
(45) Date of publication and mention of the grant of the patent: **18.02.2009**
(21) Application number: 06756012.8
(22) Date of filing: 29.05.2006
(51) Int. Cl.: C09K 3/10, C08K 3/00, C08K 3/04, C08K 3/38, C08K 5/00, C09K 21/14

(54) **INTUMESCENT SEAL**
AUFBLÄHBARE DICHTUNG
JOINT D'ETANCHEITE INTUMESCENT

(30) Priority: 27.05.2005 IT VI20050160
(43) Date of publication of application: 09.04.2008
(73) Proprietor: Benussi, Giampaolo, 25122 Brescia (IT); Niederjaufner, Guido, 25122 Brescia (IT); Sai, Gianfranco, 38089 Darzo (IT)
(72) Inventor: Benussi, Giampaolo, 25122 Brescia (IT); Niederjaufner, Guido, 25122 Brescia (IT); Sai, Gianfranco, 38089 Darzo (IT)
(74) Representative: Pajola, Stefano
(86) International application number: PCT/IB2006/051696
(87) International publication number: WO 2006/126181

(56) References cited:
- EP-A2- 1 132 563
- WO-A-97/04037
- WO-A-20/04056913
- WO-A-20/06037423
- JP-A- 2005 126 458

## Description

### Field of the invention

This invention relates to a flexible seal formed of intumescent material, for use in strip or extruded form on fire resistant door and window frames.

Such door and window frames may be part of fire retardant structures or barriers for passive fire protection.

### Background art

According to the latest fire prevention criteria, buildings are divided into sections or compartments which are separated by fire retardant barriers having the dual purpose of preventing fire from spreading to unaffected places, and of extinguishing fire by removing the required combustion air.

Therefore, door and window frames of such fire retardant systems or barriers shall prevent the spreading of both flames and hot smoke originating from combustion to other parts of the building. Such smoke may be toxic and generate further sources of fire ignition.

To this end, such door and window frames are fitted with so-called intumescent seals, which swell when heated, thereby sealing any slits in such frames, during a fire.

With the term "intumescent" it is meant the property of a material to expand under heat, and to form a porous, insulating and substantially incombustible structure.

When heated, the intumescent composition does not melt and bum, but it forms a relatively strong carbon foam which acts as a barrier against gases and heat.

For such sealing to be effective, the expanded seal shall remain in position and resist to all mechanical stresses acting thereupon due to fire.

Seals shall also maintain their mechanical elasticity and resistance substantially constant with time even in normal conditions of use, to allow both easy fitting of the seal on the frame and stable anchorage thereof, for at least about ten years.

EP-A-949313 discloses an intumescent seal obtained from an aqueous suspension of acrylic latex, mineral fibers (mineral wool) and expandable graphite, using a process similar to a paper-making process.

One drawback of this prior art material is that it requires a wet process, using large amounts of water to be removed by compression and drying. Furthermore, the seal so obtained is partly non-cohesive and requires a support on which adhesive has to be deposited.

EP-A-1132563 discloses a seal composed of a sheath, normally acting as a cold gas seal, which in turn contains an intumescent composition that, in case of fire, acts as a hot gas seal, the latter being composed of copolymers selected from SBS, styreneisoprene-styrene, polyether, PU-polyether and preferably containing methacrylic acid molecules in a random distribution, expandable graphite and/or vermiculite, ammonium polyphosphate and a mixture of acid oxides (such as Si₂, P₂O₅) and basic oxides (such as K₂O Na₂O ZnO, CaO), preferably in the form of kaolinites. In case of fire, the mixture forms a porous and expanded ceramic-like structure.

Drawbacks of this prior art seal are that it is poorly flexible and subjected to cracks, that it has to be packaged in coils with a large-diameter spool, and that it needs a support for attachment. EP-B-839171 discloses an intumescent sealant consisting of a polymeric binder, normally used as a "hot melt" adhesive, comprising PE, ethylene-acrylate copolymers, ethylene vinyl acetate, polyamides, PU, polyesters, mineral fibers, expandable graphite, inorganic flame-retardant compounds and a thermosetting resin, such as a phenol-formaldehyde resin, as a component for forming the expanded charred structure.

One drawback of this prior art sealant is that it cannot be easily shaped into strips, wherefore it has to be used in the molten state, and directly placed on the door or window frame by suitable dispensing machines.

EP-A-879870 discloses a blend for preparing an intumescent seal comprising an elastomeric thermoplastic polymer or ethylene vinyl acetate, a phosphorous compound as a flame retardant agent, preferably a phosphoric ester, and expandable graphite. The blend may further contain inorganic fillers, such as aluminum oxide or magnesium hydrate oxide, mica, vermiculite or other silicates and inorganic fibers.

EP-B-1207183 discloses an intumescent blend, composed of a thermoplastic polymer, such as an ethylene vinyl acetate copolymer, a phosphorous compound as a flame retardant agent and at least two types of expandable graphite, having different properties, such as expanding temperatures and volumes.

EP-A-1498463 discloses an intumescent seal composed of an ethyl vinyl acetate copolymer having an acetate content of 6 to 40% by weight, a phosphorous compound as a flame retardant agent and expandable graphite.

The international application WO2006/037423 discloses seal composition comprising polyvinyl acetate, expandable graphite, borphosphat and melaminpolyphosphat.

The international application WO20041056913 discloses a seal composition comprising polyacrilate, expandable graphite and zinc borate.

EP-A-1132563 and WO9704037 disclose seal compositions comprising a thermoplastic polymer and expandable graphite.

From JP2005-126458 is known a flexible intumescent seal having all the features of the preamble of the claim 1.

### Summary of the invention

The main object of this invention is to obviate the above drawbacks by providing an intumescent seal having high mechanical elasticity and resistance to normal environment conditions, which is obtained by a solution different from those described above.
A particular object is to provide a seal having high expansibility and resistance to fluid dynamic stresses caused by a fire.

A further particular object is to provide a seal allowing strong adhesion to door or window frames even during a fire.

Yet another object of this invention is to provide an intumescent seal that is inexpensive and highly reliable in operation.

These and other objects, as better explained hereafter, are fulfilled by a flexible intumescent seal for passive fire protection according to claim 1.

The thermoplastic polymers are vinyl polymers and/or copolymers comprising one or more groups: 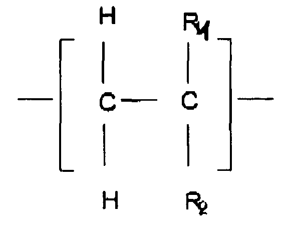 where R₁ is: H or CH₃;
and R₂ is: H,

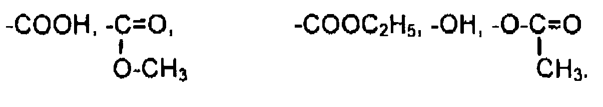

Thanks to this seal, which remains in position and seals doors or windows even under strong positive or negative pressures, the risk of smoke and/or fire spreading among the various parts of a building is considerably reduced.

### Brief Description of the Drawings

Further features and advantages of the invention will be more readily apparent from the detailed description of a few preferred non exclusive embodiments of a seal according to the invention, which is shown as a non limiting example with the help of the annexed figures, in which:
FIG. 1 is a schematic sectional view of an oven for testing intumescent seals;
FIG. 2 is a schematic axonometric view of the opening of the oven of FIG. 1;
FIG. 3 shows the thermocouple positioning pattern on a door or window frame for fire resistance tests.

### Detailed description of one preferred embodiment

The seal according to the invention is suitable for use in any kind of frames, such as doors, windows, door windows, roof windows, glazing panels, fireproof fan shutters but also in openings for the passage of cables, pipes, ventilation ducts or else, to seal each part of a building in the event of a fire.

The present intumescent seal may be manufactured by extrusion of a polymer mixture having thermoplastic properties, followed by at least one passage into a calendar for proper thickness definition or by using an injection press, drawing, molding, such processes and equipment being known to those of ordinary skill in the art.

The polymer mixture having thermoplastic properties contains one or more thermoplastic polymers, expandable graphite and at least one compound having the ability to decompose and generate an acid when exposed to high temperatures.

Expandable graphite, well known to those skilled in the art, is natural graphite, of which it retains the typical "flake" form, in whose lamellar structure an intercalant ion is introduced, by treatment with strong mineral acids in an oxidizing environment. At high temperatures, the intercalant ion reacts with carbon thereby generating a large amount of gas compounds, which open the graphite flakes apart, and produce the typical worm shape.

After treatment with acid, graphite may be washed to remove excess acid, which is possibly neutralized by alkalis. Depending on its treatment, graphite may be acid (with free, non intercalant, residual acid), neutral or basic, with alkalis remaining from the neutralization treatment. Once again, in the latter case, expansion is caused by the acid-derived intercalant anion.

Expandable graphite is sold by a number of suppliers (e.g. UCAR, Kropfmühl, Kaisersberg, NGS, Nyacol) in many types, differing from each other in terms of "flake" size, start expansion temperature, and specific volume, expressed in cm³ per gram of graphite, achieved after expansion.

The selection of the supplier and type of graphite are within the reach of those of ordinary skill in the art.

According to the invention, the expandable graphite is contained in the seal in an amount of 10% to 50% by weight and preferably of 25% to 35% by weight.

Still according to the invention, a single type of expandable graphite may be preferably used, although without limitation, which has a specific expansion of more than 250 cm³ per gram at 1000°C.

As is known, thermoplastic polymers are polymers that are in pasty form when heated to more than 80°C and become solid when cooled. They are generally processed by drawing them through a die to obtain a product of indefinite length and constant section or by using a molding press to obtain products of predetermined shapes.

The acid precursor or generating compound is a compound, generally a salt or an ester of a mineral acid, which can decompose at moderate temperatures, e.g. from 250°C to 450°C, thereby releasing the corresponding acid.

Common acid generating compounds used in polymer mixtures that are to withstand high temperatures are ammonium phosphate, generally in the polymeric polyphosphate form, phosphoric acid esters, such as triphenyl ester, melamine phosphate.

From about 100°C to about 400°C. depending on the degree of polymerization, ammonium phosphate decomposes to the phosphate ion and ammonia.

According to this invention, the mixture of thermoplastic polymers comprises at least one vinyl polymer.

Vinyl polymers according to the invention are polymers or copolymers whose polymer chain also contain the following group 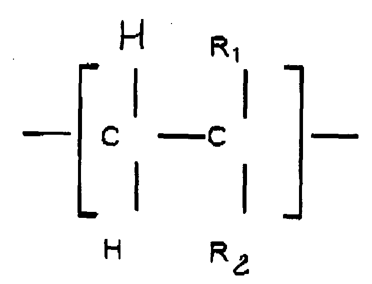 where R₁ is hydrogen or methyl and R₂ may be hydrogen, the carboxy group -OOOH (acrylates), the hydroxy group -OH, the acetic group -CH₃COO, the group -CH₃COO, (methacrylates), the group -COOC₂H₅ (ethyl acrylates).

According to the invention, the vinyl polymers used preferably include HOPE, LDPE, PE, EVA, PVAC, PVAL, PAA and/or mixtures thereof.

Suitably, the vinyl polymer is polyethylene vinyl acetate (EVA) having an acetate content of 20% to 50% by weight.

Several vinyl polymers may be used at the same time, including PE (polyethylene) and PVA (polyvinyl acetate). In this case, the acetate content will be related to the total of vinyl polymers in use.

At temperatures above 400°C, the acetic group is expelled, thereby leaving an unsaturation, wherefrom cyclization reactions are initiated, which are themselves catalyzed by the presence of mineral acid, and lead to the production of a carbon compound which is stable at high temperatures.

A boron compound is intended as a boron-containing compound selected from the group containing ammonium pentaborate, triisopropyl borate, tri-n-propyl borate, melamine borate.

In accordance with a preferred embodiment, the inorganic boron compound is ammonium pentaborate.

Particularly preferred compounds are tributyl borates and triisopropyl borates.

According to another preferred embodiment, R₃ and R₄ are hydrogen and R₅ is melamine (1, 3, 5 triazins 2, 4, 6 triamines): the organic boron compound is melamine borate.

According to this preferred embodiment, the organic boron compound decomposes thereby forming an acid borate compound and gaseous melamine, which assists both the expansion of the charred structure and the spongy formation thereof, which structure is responsible to a significant extent for the thermal insulation properties of the expanded intumescent structure.

To enhance gas development, as is known to those skilled in the art, melamine and/or another gas developing compound may be added, which are preferably of the nitrogenous type to avoid the formation of fuel gases.

Advantageously, the mixture for making the intumescent seal may contain vinyl polymer in an amount of 30% to 60% by weight with respect to the final blend, preferably of 35% to 45% by weight, still with respect to the final blend, and the organic boron compound in an amount of 1 % to 40% by weight and preferably of 2% to 25% by weight.

Up to 20% by weight of HDPE or LDPE or a mixture thereof may be added as an adjuvant to obtain a finished product with optimized mechanical properties, as is known to those of ordinary skill in the art.

Since organic boron compounds are soluble in vinyl polymers, effective results are obtained by mixing during extrusion: as a result, reagents for pyrolysis are evenly distributed, and the charred structure obtained thereby is particularly hard and persistent.

The composition of the invention obviates the drawbacks associated by prior art seal formulations.

In addition to the above compounds, the blend for making the seal of this invention may further contain ammonium polyphosphate in amounts of 1 % to 30% by weight, preferably of 2% to 25% by weight. As is known, ammonium polyphosphate decomposes at temperatures above 350°C in gaseous ammonia, which contributes to intumescence, and phosphoric acid which contributes to catalysis for forming a stable charred structure.

Since ammonium phosphate decomposes at relatively low temperatures, about 100°C, which are too low to initiate the cyclization process, a proper charred structure may be only formed by using ammonium polyphosphate, preferably with a chain having a molecular weight of more than 1000 units, which decomposes at temperatures above 350°C.

Furthermore, polyphosphate chains, which are scarcely movable in the polymer and substantially insoluble in water, limit migration of the polyphosphate from the inside to the surface and washout when the seal is exposed to or used in high moisture conditions, as well as degradation of expansion properties.

Washout and degradation may be further limited by using ammonium polyphosphate particles pre-coated with the vinyl polymers and polyolefins, to protect the polyphosphate from moisture.

An ammonium polyphosphate pre-coated with a formaldehyde melamine-based thermosetting resin is particularly suitable therefor.

In accordance with another preferred embodiment, the ammonium polyphosphate may be silanized to enhance compatibility with the polymer matrix, thereby promoting deacetylation and cyclization of acetate.

According to the invention, this produces a particularly stable and ceramic-like expanded charred structure, which requires no addition of carbon generating substances and/or inorganic glass structure forming substances.

In addition, the seal of this invention may contain a small amount of hydrated aluminum oxide and/or hydrated magnesium oxide, in amounts of 1% to 30% by weight and preferably of 1 % to 6% by weight.

When heated, both substances release water of crystallization; thereby absorbing great amounts of heat.

In addition to the above components other components may be obviously provided, which are ordinarily used in plastics industry and are known to those skilled in the art, such as UV stabilizers, e.g. carbon black, in amounts of 1 % to 3% by weight, antioxidants, e.g. IRGANOX 1010® (CIBA) in amounts of less than 1%, inorganic fillers such as calcium carbonate, mica, talc, kaolinite in amounts of not more than 30%, without departure from the scope of the invention.

To facilitate installation of the seal, suitable attachment means may be provided on a flat face thereof, such as a layer of adhesive material.

For such attachment to be effective and resist, at normal environment conditions, for at least ten years, the adhesive shall be partly soluble and adhere to the polymer matrix of the seal, while contributing to the formation of the charred structure in the event of a fire.

Acrylic polymer and polyethyl vinyl acetate adhesives are particularly suitable.

### Example 1

A 16 mm corotating twin-screw extruder is fed by dosers (Brabender Twin-Screw) with 400 g/h of EVA, 3 melt index, with 40% acetate, 300 g/h of neutral expandable graphite (NGS), 250 g/h of melamine borate, 50 g/h of ammonium polyphosphate, 50 g/h of hydrated aluminum oxide, 1 g/h of carbon black, thereby obtaining a 2 mm thick and 30 mm wide web. Intumescent properties are determined by measuring the expansion ratio, i.e. the ratio between the final height and the initial height of a 50 mm diameter sample which is placed in a muffle furnace at 350°C, 450°C and 550°C respectively for 30 minutes.

In such measurements, the sample is placed on the bottom of a steel cylinder of identical diameter. Measurements were carried out both with the sample being free to expand (free expansion), and with the sample expanding against a 100 g weight placed thereon (expansion under load). The results are reported in Table 1.

**Table 1**

| Temperature | Free expansion ratio | Expansion ratio under load |
|---|---|---|
| 350 °C | 19 | 14 |
| 450 °C | 23 | 16 |
| 550 °C | 27 | 18 |

The only applicable European standard is a DIBt guideline (*Deutsches Institut für Bautechnik, Zulassungsgrundsätze für dämmschichtbildende Baustoffe*) which requires an expansion ratio under load at 450°C above 5.7.

### Examples 2-15

Using the extruder and the measuring system of Example 1, seals were prepared from the blends reported in Tables 2, 3 and 4, and were tested, providing the expansion results indicated in such tables. In these tables, the vinyl acetate-containing polymers are conveniently characterized by two numbers, the melt index (MI), in accordance with ASTM, and the vinyl acetate content in percent. For example, 3/40 indicates a 3 Melt Index and 40% vinyl acetate.

The expandable graphite used in the following examples was sold by: Faima (Milan, Italy), UCAR (USA), NGS (Germany).

**Table 2**

| Example | **2** | **3** | **4** | **5** | **6** |
|---|---|---|---|---|---|
| EVA 7/28 | | | | | 40 |
| EVA 3/40 | 35 | 35 | 40 | 40 | |
| EVA 50/50 | | | | | |
| EVA 50/80 | | | | | |
| PVA | | | | | |
| LDPE | | | | | |
| HDPE | | | | | |
| Neutral expandable graphite | 35 | | 25 | 29 | 30 |
| Acid expandable graphite | | 29 | | | |
| Melamine borate | 5 | 33 | 17 | 5 | 2 |
| Ammonium pentaborate | | | 10 | | |
| Triisopropyl borate | | | | | |
| Ammonium polyphosphate | 20 | | 5 | | 25 |
| Ammonium polyphosphate coated with melamine resin | | | | 22 | |
| Silanized ammonium polyphosphate | | | | | |
| Melamine phosphate | | | | | |
| Hydrated aluminum oxide | 2 | 2.5 | | | 2.5 |
| Hydrated magnesium oxide | 2 | | 2.5 | 3 | |
| Carbon black | 1 | 0.5 | 0.5 | 1 | 0.5 |

| Free expansion ratio | | | | | |
|---|---|---|---|---|---|
| 350 °C | 17 | 19 | 15 | 16 | 18 |
| 450 °C | 20 | 22 | 18 | 25 | 24 |
| 550 °C | 21 | 24 | 20 | 29 | 28 |

| Expansion ratio under load | | | | | |
|---|---|---|---|---|---|
| 350 °C | 11 | 13 | 9 | 12 | 14 |
| 450 °C | 15 | 16 | 11 | 15 | 15 |
| 550 °C | 15 | 16 | 14 | 20 | 18 |

**Table 3**

| Example | **7** | **8** | **9** | **10** | **11** | **12** |
|---|---|---|---|---|---|---|
| EVA 7/28 | 45 | 38 | | | 15 | 20 |
| EVA 3/40 | | | 40 | 35 | | |
| EVA 50/50 | | | | | | 20 |
| EVA 50/80 | | | | | 20 | |
| PVA | | | | | | |
| LDPE | | | | 10 | | 5 |
| HDPE | | | | | 5 | |
| Neutral expandable graphite | | 29 | 30 | 28 | 31 | 25 |
| Acid expandable graphite | 25 | | | | | |
| Melamine borate | 22 | | | 5 | 21 | 5 |
| Ammonium pentaborate | | | 15 | | | |
| Triisopropyl borate | | 20 | | | | |
| Ammonium polyphosphate | 5 | 8 | 10 | 19 | 5 | |
| Ammonium polyphosphate coated with melamine resin | | | | | | |
| Silanized ammonium polyphosphate | | | | | | 22 |
| Melamine phosphate | | | | | | |
| Hydrated aluminum oxide | 2.5 | | | 2 | 2 | |
| Hydrated magnesium oxide | | 4.5 | 4.5 | | | 2.5 |
| Carbon black | 0.5 | 0.5 | 0.5 | 1 | 1 | 0.5 |

| Free expansion ratio | | | | | | |
|---|---|---|---|---|---|---|
| 350 °C | 15 | 8 | 19 | 15 | 20 | 13 |
| 450 °C | 17 | 11 | 25 | 19 | 24 | 16 |
| 550 °C | 21 | 15 | 29 | 20 | 24 | 20 |

| Expansion ratio under load | | | | | | |
|---|---|---|---|---|---|---|
| 350 °C | 9 | 6 | 13 | 9 | 12 | 10 |
| 450 °C | 12 | 7 | 16 | 10 | 14 | 12 |
| 550 °C | 15 | 9 | 19 | 13 | 16 | 15 |

**Table 4**

| Example | **13** | **14** | **15** | **16** | **17** | **18** |
|---|---|---|---|---|---|---|
| EVA 7/28 | 20 | 30 | 20 | | | 15 |
| EVA 3/40 | | | | 39 | 30 | 25 |
| EVA 50/50 | | | | | | |
| EVA 50/80 | 20 | | | | 10 | |
| PVA | | 15 | | | | |
| LDPE | | | | | 10 | |
| HDPE | 5 | | | | | |
| Neutral expandable graphite | 27 | 30 | 33 | 30 | 27 | 30 |
| Acid expandable graphite | | | | | | |
| Melamine borate | 5 | 2 | 5 | 1 | | 27 |
| Ammonium pentaborate | | | | | | |
| Triisopropyl borate | | | | | | |
| Ammonium polyphosphate | | | 10 | | | |
| Ammonium polyphosphate coated with melamine resin | | 20 | | 15 | | |
| Silanized ammonium polyphosphate | 20 | | | | | |
| Melamine phosphate | | | 8 | | | |
| Hydrated aluminum oxide | | | | 2.5 | 2.5 | 2.5 |
| Hydrated magnesium oxide | 2.5 | 2 | 3 | | | |
| Carbon black | 0.5 | 1 | 1 | 0.5 | 0.5 | 0.5 |

| Free expansion ratio | | | | | | |
|---|---|---|---|---|---|---|
| 350 °C | 14 | 12 | 17 | 19 | 14 | 17 |
| 450 °C | 17 | 16 | 22 | 23 | 20 | 24 |
| 550 °C | 19 | 18 | 27 | 30 | 25 | 28 |

| Expansion ratio under load | | | | | | |
|---|---|---|---|---|---|---|
| 350 °C | 11 | 9 | 13 | 12 | 10 | 14 |
| 450 °C | 14 | 10 | 16 | 16 | 13 | 16 |
| 550 °C | 16 | 13 | 18 | 18 | 16 | 18 |

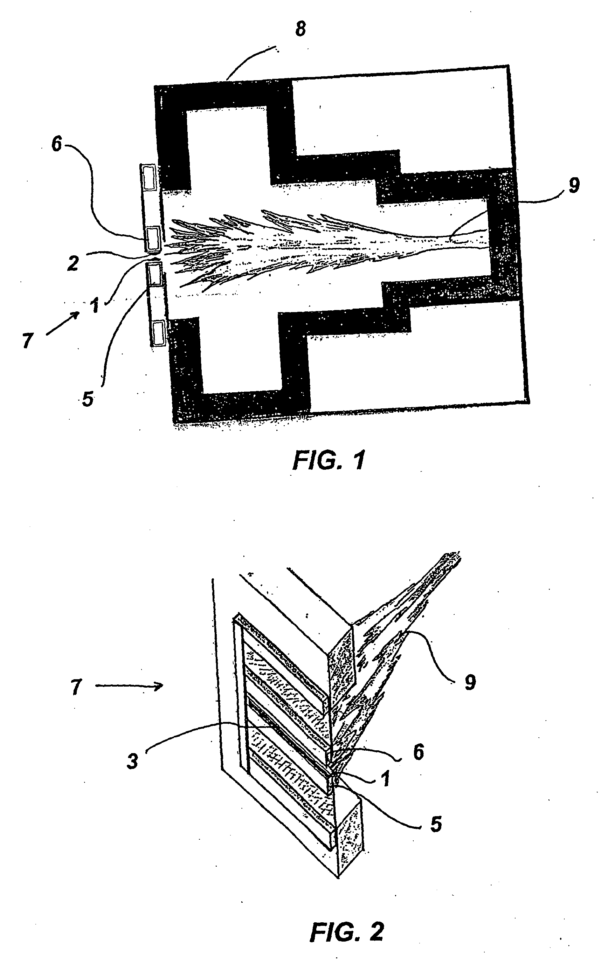

Referring to Figures 1 and 2, two intumescent sealing strips 1, 2 having a width of 20 mm and a height of 1.5 mm, extruded from the formulations of examples 1, 3, 6, 15, 16 have been placed on the edges 3, 4 of two frame profiles 5, 6 which are 20 mm apart, and the frame is placed on the opening 7 of a furnace 8. Once they have been invested by a flame 9, about 600 mm long, they have sealed the opening in less than 30 seconds and have maintained such sealing stable for more than 120 minutes.

Two fire doors, with the intumescent seals made from formulations 3 and 16 applied thereon in distinct sections, have been fire tested for validation according to the procedure of UNI EN 1634-1 standard.

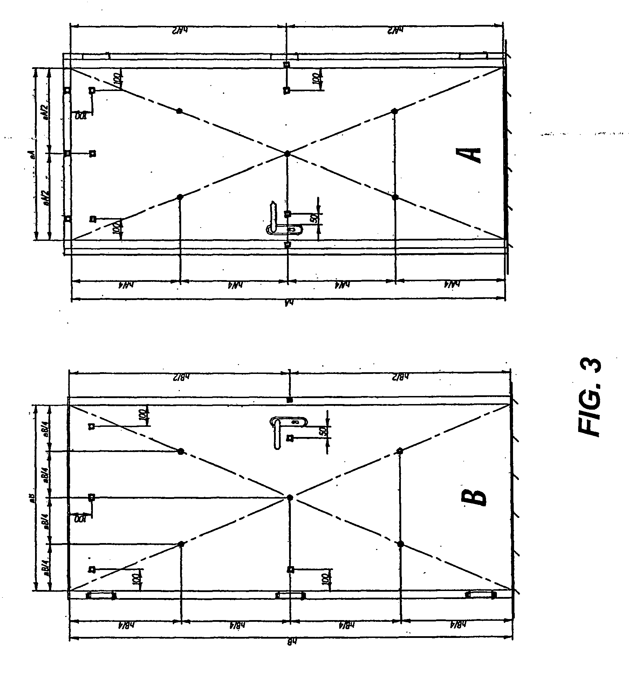

The annexed FIG. 3 shows the positions of thermocouples. For a predetermined time, depending on the desired classification (30, 60, 120, 180 minutes), the thermocouples should indicate a temperature increase of less than 180°C on the door and of less than 360°C on the frame.

The doors equipped with the above seals have exceeded a fire resistance time of 120 minutes. Particularly, the seal was able to entirely seal, without falling, even the opening that was formed after 80 minutes from the start of the test between the frame and the door, when the door was bent due to thermal expansion.

The intumescent seal of the invention is susceptible of a many changes and variants within the inventive principle disclosed in the annexed claims.

## Claims

1. A flexible intumescent seal, with a base material consisting of a blend comprising at least one thermoplastic polymer, expandable graphite and at least one compound which decompose at moderate temperature generating a corresponding acid, wherein said acid generating compound is a boron compound, **characterized in that** said at least one thermoplastic polymer is a vinyl polymer and/or copolymer and **in that** said boron compound is selected from the group containing ammonium pentaborate, triisopropyl borate, tri-n-propyl borate, melamine borate.

2. Flexible intumescent seal as claimed in claim 1, **characterized in that** said at least one vinyl polymer and/or copolymer comprises one or more groups 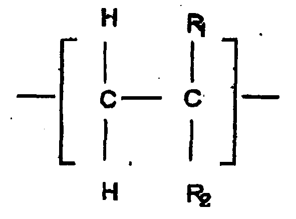 where R₁ is: H or CH₃;
and R₂ is: H,

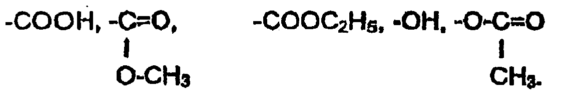

3. Flexible intumescent seal as claimed in claim 1, **characterized in that** said vinyl polymer is selected from the group comprising HDPE, LDPE, PE, EVA, PolyVinyl Acetate, PolyVinyl AcetaL, Poly Acryl Amide and/or mixtures thereof.

4. Flexible intumescent seal as claimed in claim 1, **characterized in that** said at least one vinyl polymer contains a total amount of vinyl acetate of 20% to 50% and preferably of 25% to 40% by weight.

5. Flexible intumescent seal as claimed in claim 1 or 4, **characterized in that** said at least one vinyl polymer is contained in said blend in an amount of 30% to 60% by weight and said boron compounds are contained in sold blend in an amount of 1% to 30% by weight and preferably of 2% to 25% by weight based on the total weight of the composition.

6. Flexible intumescent seal as claimed In any preceding claim, **characterized in that** said blend further comprises a nitrogenous phosphoric acid compound, which can decompose in the event of fire, in an amount of 1% to 30% by weight based on the total weight of the composition.

7. Flexible intumescent seal as claimed in claim 6, **characterized in that** said nitrogenous phosphoric acid compound is ammonium polyphosphate having a molecular weight of more than 1000 daltons or melamine phosphate.

8. Flexible intumescent seal as claimed in claim 7, **characterized in that** said ammonium polyphosphate is pre-coated with a polymer to limit water solubility.

9. Flexible intumescent seal as claimed in claim 8, **characterized in that** said ammonium polyphosphate is silanized to enhance compatibility With the other components of the blend

10. Flexible intumescent seal as claimed in claim 1, **characterized in that** said expandable graphite is contained in said blend in an amount of 10% to 50% by weight and preferably of 25% to 35% by weight based on the total weight of the composition.

11. Flexible intumescent seal as claimed in any preceding claim, **characterized in that** it further comprises at least one inorganic flame retardant compound, selected from the group comprising hydrated aluminum oxide and/or hydrated magnesium oxide In amounts of 1% to 30% and preferably of 1% to 6% by weight based on the total weight of the composition.

12. Flexible intumescent seal as claimed in any preceding claim, **characterized in that** said blend further comprises carbon black in an amount of 0.3% to 3% by weight and preferably of 1 % to 2% by weight based on the total weight of the composition.

13. Flexible intumescent seal as claimed in any preceding claim, **characterized in that** it has at least one surface for connection with overlying attachment means for easy installation of the seal.

14. Flexible intumescent seal as claimed in claim 13, **characterized in that** said attachment means include a polyethylene vinyl acetate-based adhesive.

15. Flexible intumescent seal as claimed in any preceding claim, **characterized in that** it is formed by extrusion, drawing, molding or injection of said blend.

16. A fire-resisting door or window frame, **characterized in that** it comprises a flexible intumescent seal as claimed in any preceding claim.

## Patentansprüche

1. Biegsame, aufblähbare Dichtung mit einem Grundmaterial aus einer Mischung mit mindestens einem thermoplastischen Polymer, ausdehnbarem Graphit und mindestens einer Verbindung, die sich zersetzt bei moderaten Temperaturen und dabei eine entsprechende Säure erzeugt, wobei die Säure erzeugende Verbindung eine Boron-Verbindung ist, **dadurch gekennzeichnet, dass** das mindestens eine thermoplastische Polymer ein Vinyl-Polymer und/oder Copolymer ist und dass die Boron-Verbindung aus der Gruppe ausgewählt ist, die Ammonium-Pentaborate, Triisopropylborate, Tri-n-Propylborate, Melaminborate enthält.

2. Biegsame, aufblähbare Dichtung gemäß Anspruch 1, **dadurch gekennzeichnet, dass** das mindestens eine Vinyl-Polymer und/oder Copolymer mindestens eine oder mehrere der Gruppen 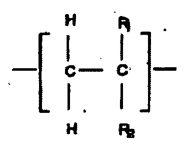 aufweist, wobei R₁ ist: H oder CH3;
und R₂ ist: H, -COOH,

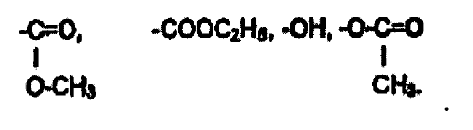

3. Biegsame, aufblähbare Dichtung gemäß Anspruch 1, **dadurch gekennzeichnet, dass** das Vinyl-Polymer aus der Gruppe ausgewählt ist, die HDPE, LDPE, PE, EVA, Polyvinyl Acetate, Polyvinyl Acetal, Polyacryl Amide und/oder deren Mischungen enthält.

4. Biegsame, aufblähbare Dichtung gemäß Anspruch 1, **dadurch gekennzeichnet, dass** das mindestens eine Vinyl-Polymer eine Gesamtmenge von Vinyl Acetaten von 20 Masse-% bis 50 Masse-% und vorzugsweise von 25 Masse-% bis 40 Masse-% enthält.

5. Biegsame, aufblähbare Dichtung gemäß Anspruch 1 oder 4, **dadurch gekennzeichnet, dass** das mindestens eine Vinyl-Polymer in der Mischung enthalten ist mit einer Menge von 30 Masse-% bis 60 Masse-% und die Boron-Verbindungen in der Mischung enthalten sind mit einer Menge von 1 Masse-% bis 30 Masse-% und vorzugsweise von 2 Masse-% bis 25 Masse-% bezogen auf das Gesamtgewicht der Zusammensetzung.

6. Biegsame, aufblähbare Dichtung gemäß einem der vorhergehenden Ansprüche, **dadurch gekennzeichnet, dass** die Mischung zudem eine stickstoff-, phosphorhaltige Säureverbindung enthält, die sich im Fall von Feuer zersetzen kann mit einer Menge von 1 Masse-% bis 30 Masse-% bezogen auf das Gesamtgewicht der Zusammensetzung.

7. Biegsame, aufblähbare Dichtung gemäß Anspruch 6, **dadurch gekennzeichnet, dass** die stickstoff-, phosphorhaltige Säureverbindung ein Ammonium-Polyphosphat ist mit einem Molekulargewicht von mehr als 1000 Daltons oder Melamin-Phosphat.

8. Biegsame, aufblähbare Dichtung gemäß Anspruch 7, **dadurch gekennzeichnet, dass** das Ammonium-Polyphosphat vorbeschichtet ist mit einem Polymer, um die Wasserlöslichkeit zu begrenzen.

9. Biegsame, aufblähbare Dichtung gemäß Anspruch 8, **dadurch gekennzeichnet, dass** das Ammonium-Polyphosphat silanisiert ist, um die Verträglichkeit mit den anderen Verbindungen der Mischung zu verbessern.

10. Biegsame, aufblähbare Dichtung gemäß Anspruch 1, **dadurch gekennzeichnet, dass** das ausdehnbare Graphit in der Mischung enthalten ist mit einer Menge von 10 Masse-% bis 50 Masse-% und vorzugsweise von 25 Masse-% bis 35 Masse-% bezogen auf das Gesamtgewicht der Zusammensetzung.

11. Biegsame, aufblähbare Dichtung gemäß einem der vorhergehenden Ansprüche, **dadurch gekennzeichnet, dass** zudem mindestens eine anorganische Verbindung als Entflammbarkeitsverzögerer vorgesehen ist, die aus der Gruppe ausgewählt ist, die hydrierte Aluminiumoxide und/oder hydrierte Magnesiumoxide enthält mit Mengen von 1 Masse-% bis 30 Masse-% und vorzugsweise von 1 Masse-% bis 6 Masse-% bezogen auf das Gesamtgewicht der Zusammensetzung.

12. Biegsame, aufblähbare Dichtung gemäß einem der vorhergehenden Ansprüche, **dadurch gekennzeichnet, dass** die Mischung zudem schwarzen Kohlenstoff enthält mit einer Menge von 0,3 Masse-% bis 3 Masse-% und vorzugsweise von 1 Masse-% bis 2 Masse-% bezogen auf das Gesamtgewicht der Zusammensetzung.

13. Biegsame, aufblähbare Dichtung gemäß einem der vorhergehenden Ansprüche, **dadurch gekennzeichnet, dass** mindestens eine Oberfläche vorgesehen ist zum Anschluss an aufliegenden Anschlusseinrichtungen zur einfachen Installation der Dichtung.

14. Biegsame, aufblähbare Dichtung gemäß Anspruch 13, **dadurch gekennzeichnet, dass** die Anschlusseinrichtungen einen Klebstoff auf der Basis von Polyethylen-Vinylacetat enthalten.

15. Biegsame, aufblähbare Dichtung gemäß einem der vorhergehenden Ansprüche, **dadurch gekennzeichnet, dass** es mittels Extrusion, Ziehen, Giessen oder Spritzen der Mischung gebildet ist.

16. Feuerfeste Tür oder Fensterrahmen, **dadurch gekennzeichnet, dass** eine biegsame, aufblähbare Dichtung gemäß einem der vorhergehenden Ansprüche vorgesehen ist.

## Revendications

1. Joint d'étanchéité intumescent flexible, avec un matériau de base constitué d'un mélange comprenant au moins un polymère thermoplastique, du graphite dilatable et au moins un composé se décomposant à une température modérée générant un acide correspondant, dans lequel ledit composé générant un acide est un composé du bore, **caractérisé en ce que** ledit au moins un polymère thermoplastique est un polymère et/ou un copolymère vinylique et **en ce que** ledit composé du bore est choisi dans le groupe contenant du pentaborate d'ammonium, du borate de triisopropyle, du borate de tri-n-propyle, du borate de mélamine.

2. Joint d'étanchéité intumescent flexible selon la revendication 1, **caractérisé en ce que** ledit au moins un polymère et/ou copolymère vinylique comprend un ou plusieurs groupes 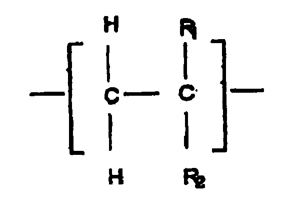 où R₁ représente : H ou CH₃ ;
et R₂ représente :

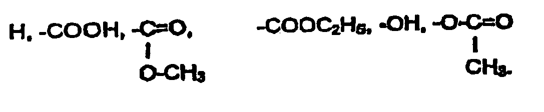

3. Joint d'étanchéité intumescent flexible selon la revendication 1, **caractérisé en ce que** ledit polymère vinylique est choisi dans le groupe comprenant HDPE, LDPE, PE, EVA, du poly(acétate de vinyle), du poly(acétal de vinyle), du polyacrylamide et/ou leurs mélanges.

4. Joint d'étanchéité intumescent flexible selon la revendication 1, **caractérisé en ce que** ledit au moins un polymère vinylique contient une quantité totale d'acétate de vinyle de 20 % à 50 % et de préférence de 25 % à 40 % en poids.

5. Joint d'étanchéité intumescent flexible selon la revendication 1 ou 4, **caractérisé en ce que** ledit au moins un polymère vinylique est contenu dans ledit mélange en une quantité de 30 % à 60 % en poids et lesdits composés du bore sont contenus dans ledit mélange en une quantité de 1 % à 30 % et de préférence de 2 à 25 % en poids basée sur le poids total de la composition.

6. Joint d'étanchéité intumescent flexible selon l'une quelconque des revendications précédentes, **caractérisé en ce que** ledit mélange comprend de plus un composé de l'acide phosphorique azoté, qui peut se décomposer en cas d'incendie, dans une quantité de 1 % à 30 % en poids basée sur le poids total de la composition.

7. Joint d'étanchéité intumescent flexible selon la revendication 6, **caractérisé en ce que** ledit composé de l'acide phosphorique azoté est un polyphosphate d'ammonium ayant une masse moléculaire de plus de 1 000 daltons ou un phosphate de mélamine.

8. Joint d'étanchéité intumescent flexible selon la revendication 7, **caractérisé en ce que** ledit polyphosphate d'ammonium est pré-revêtu d'un polymère afin de limiter la solubilité dans l'eau.

9. Joint d'étanchéité intumescent flexible selon la revendication 8, **caractérisé en ce que** ledit polyphosphate d'ammonium est traité aux silanes pour augmenter la compatibilité avec les autres composants du mélange.

10. Joint d'étanchéité intumescent flexible selon la revendication 1, **caractérisé en ce que** ledit graphite dilatable est contenu dans ledit mélange en une quantité de 10 % à 50 % en poids et de préférence de 25 % à 35 % en poids basée sur le poids total de la composition.

11. Joint d'étanchéité intumescent flexible selon l'une quelconque des revendications précédentes, **caractérisé en ce qu'**il comprend de plus au moins un composé ignifuge inorganique, choisi dans le groupe comprenant de l'oxyde d'aluminium hydraté et/ou de l'oxyde de magnésium hydraté dans des quantités de 1 % à 30 % et de préférence de 1 % à 6 % en poids basées sur le poids total de la composition.

12. Joint d'étanchéité intumescent flexible selon l'une quelconque des revendications précédentes, **caractérisé en ce que** ledit mélange comprend de plus du noir de carbone dans une quantité de 0,3 % à 3 % en poids et de préférence de 1 % à 2 % en poids basée sur le poids total de la composition.

13. Joint d'étanchéité intumescent flexible selon l'une quelconque des revendications précédentes, **caractérisé en ce qu'**il possède au moins une surface destinée à une connexion avec des moyens de fixation sus-jacents en vue d'une installation facile du joint d'étanchéité.

14. Joint d'étanchéité intumescent flexible selon la revendication 13, **caractérisé en ce que** lesdits moyens de fixation incluent un adhésif à base de polyéthylène et d'acétate de vinyle.

15. Joint d'étanchéité intumescent flexible selon l'une quelconque des revendications précédentes, **caractérisé en ce qu'**il est formé par extrusion, étirage, moulage ou injection dudit mélange.

16. Porte ou cadre de fenêtre résistant au feu, **caractérisé**(e) en ce qu'il(elle) comprend un joint d'étanchéité intumescent flexible selon l'une quelconque des revendications précédentes.
